# FASCICULE DE BREVET EUROPEEN

(11) **EP 4 085 378 B1**
(45) Date de publication et mention de la délivrance du brevet: **13.09.2023**
(21) Numéro de dépôt: 20828034.7
(22) Date de dépôt: 02.12.2020
(51) Int. Cl.: G06K 19/02, G06K 19/077

(54) **CARTE A PUCE METALLIQUE APTE A FONCTIONNER EN SANS CONTACT**
METALLCHIPKARTE, DIE KONTAKTLOS FUNKTIONIERT
METAL CHIP CARD ABLE TO FUNCTION CONTACTLESSLY

(30) Priorité: 31.12.2019 FR 1915760
(43) Date de publication de la demande: 09.11.2022
(73) Titulaire: IDEMIA France, 92400 Courbevoie (FR)
(72) Inventeur: ALI, Ahmed, 92400 COURBEVOIE (FR); GROULT, Tiphaine, 92400 COURBEVOIE (FR)
(74) Mandataire: Idemia
(86) Numéro de dépôt international: PCT/FR2020/052254
(87) Numéro de publication internationale: WO 2021/136891

(56) Documents cités:
- WO-A1-2019/173455
- US-A1- 2011 031 319
- US-A1- 2018 025 261
- US-A1- 2018 132 376
- US-A1- 2019 065 927

## Description

### Domaine Technique

L'invention se rapporte au domaine des cartes à puce et porte plus particulièrement sur les cartes à puce métalliques aptes à fonctionner en mode sans contact.

### Technique antérieure

L'utilisation des cartes à puce (ou cartes à microcircuit) est aujourd'hui largement répandue dans la vie quotidienne. De telles cartes sont par exemple utilisées comme cartes bancaires, cartes de fidélité, cartes d'accès etc., et peuvent prendre divers formats selon leurs utilisations respectives. Les cartes à puce peuvent être conçues pour réaliser divers types de fonctions, notamment pour effectuer des transactions, telles que des transactions bancaires (transaction de paiement, de transfert...), des transactions d'authentification, etc.

De façon connue, une carte à puce comprend généralement un corps de carte qui est équipé d'une puce électronique configurée pour traiter des signaux et réaliser diverses fonctions selon l'utilisation souhaitée de la carte. Une carte à puce est également munie de moyens de communication permettant à la puce électronique d'interagir avec l'extérieur, typiquement avec un terminal ou lecteur externe.

Traditionnellement, une carte à puce est conçue pour coopérer avec un terminal externe au moyen de contacts externes accessibles à la surface de la carte. Un terminal externe peut ainsi positionner des broches de contact appropriées sur les contacts externes de la carte afin d'établir une communication par contact.

Plus récemment, les cartes à puce sans contact ont connu un essor croissant en raison du gain en rapidité et en simplicité liées aux transactions sans contact. Pour ce faire, les cartes sans contact embarquent une antenne radiofréquence (RF) permettant la transmission et la réception de signaux RF avec un terminal externe. Cette antenne RF est généralement composée d'une pluralité de spires conductrices qui s'étendent dans le corps de la carte.

La structure et l'apparence des cartes à puce peuvent varier selon le cas. Une tendance consiste aujourd'hui à proposer aux utilisateurs des cartes à puce métalliques. Il a été observé que les cartes métalliques sont plus robustes faces aux stress mécaniques et sont donc moins susceptibles de rompre ou de s'endommager.

En outre, il existe une demande croissante pour les cartes à puce métalliques en raison notamment de l'aspect esthétique attractif de ces cartes (reflets métalliques, effet brossé en surface etc.), de l'impression de qualité qu'elle peut procurer dans les mains de son utilisateur (poids appréciable du métal...), ou encore de la connotation de prestige qui y est associée pour leurs utilisateurs. En raison notamment du poids plus important et de leur aspects esthétiques particuliers, ces cartes servent de marqueur social et d'élément différenciant pour les personnes fortunées en particulier.

Il a cependant été observé que la présence de métal dans le corps d'une carte à puce pose des difficultés lorsque la carte embarque une antenne RF pour fonctionner en sans contact. Le métal agit comme blindage électromagnétique et bloque ou gêne les signaux RF échangés par l'antenne RF avec l'extérieur. Le métal présent dans le corps de carte peut ainsi perturber les communications sans contact d'une carte à puce avec un terminal externe et empêcher par exemple la réalisation d'une transaction sans contact (de paiement ou autre).

Il existe donc un besoin pour une solution permettant la réalisation d'une carte à puce métallique lourde et robuste pour les raisons évoquées ci-avant, tout en garantissant que cette carte puisse communiquer en sans contact avec l'extérieur, notamment avec un terminal externe prévu à cet effet. En particulier, il est souhaitable qu'une carte à puce métallique (de type RFID par exemple) puisse coopérer en sans contact avec un terminal externe quel que soit l'orientation de la carte vis-à-vis de ce terminal.

US 2019/065927 A1 concerne une carte à puce sans contact comprenant une antenne positionnée entre une couche métallique supérieure et une couche support en métal. Des trous sont ménagés dans la couche métallique supérieure et dans la couche support.

### Exposé de l'invention

A cet effet, la présente invention concerne une carte à puce comprenant :
- une pluralité de couches métalliques comportant au moins une couche métallique supérieure et une couche métallique inférieure disposées en regard l'une de l'autre ;
- une cavité interne ménagée entre les couches métalliques supérieure et inférieure ; et
- une antenne RF, comprenant au moins une spire conductrice, disposée dans la cavité interne ;
dans laquelle les couches métalliques supérieure et inférieure comprennent chacune une zone d'évidemment partiel en regard de ladite au moins une spire, chaque zone d'évidement partiel comportant au moins une ouverture au travers de l'épaisseur de ladite couche métallique, caractérisé en ce que chaque zone d'évidement partiel est partiellement recouverte par au moins une protrusion métallique s'étendant depuis un bord (16) de la zone d'évidement partiel de sorte à définir le contour de ladite au moins une ouverture, et chaque protrusion métallique forme un doigt qui s'étend en regard d'une partie au moins de l'antenne RF.

Grâce aux zones d'évidement partiel positionnées de part et d'autre de l'antenne RF, on peut avantageusement établir une communication RF de l'antenne RF au travers des zones d'évidement partiel, sans perturber le flux magnétique de l'antenne RF et ce, quelle que soit son orientation vis-à-vis d'un terminal externe. Le flux magnétique de l'antenne RF est capable de traverser les zones d'évidement partiel au travers des ouvertures traversantes. En outre, la présence d'un ou de multiples protrusions métalliques dans chaque zone d'évidement partiel permet d'assurer l'intégrité physique et la bonne robustesse de la carte à puce sans que ce soit préjudiciable pour le bon fonctionnement de l'antenne RF. Un utilisateur peut ainsi utiliser sa carte à puce en mode sans contact pour interagir avec un terminal externe, sans se soucier de l'orientation de la carte à puce.

Selon un mode de réalisation particulier, la carte à puce comprend au moins une fente traversante s'étendant dans au moins une couche métallique depuis un bord d'une zone d'évidement partiel jusqu'à un bord périphérique de ladite couche métallique.

Selon un mode de réalisation particulier, la cavité interne est formée par au moins un renfoncement dans l'une au moins parmi les couches métalliques supérieure et inférieure.

Selon un mode de réalisation particulier, la carte à puce comprend une couche métallique intermédiaire positionnée entre les couches métalliques supérieure et inférieure, ladite cavité interne étant formée par une ouverture traversante ménagée dans la couche métallique intermédiaire.

Selon un mode de réalisation particulier, chaque protrusion métallique forme un doigt (ou doigt métallique) s'étendant en regard (en face) d'au moins une partie de ladite au moins spire. Ainsi, chaque zone d'évidement partiel comprend au moins une protrusion métallique formant un doigt en regard d'au moins une partie de ladite au moins une spire.

Selon un mode de réalisation particulier, chaque zone d'évidement partiel comprend une pluralité de dites protrusions métalliques formant des doigts en regard d'au moins une partie de ladite au moins une spire.

Selon un mode de réalisation particulier, chaque protrusion métallique s'étend dans l'une des zones d'évidement partiel de sorte que son extrémité distale soit libre, à distance non nulle du bord de ladite zone d'évidement.

Selon un mode de réalisation particulier, chaque zone d'évidemment partiel comprend une pluralité de dites protrusions métalliques séparées les unes des autres par au moins une dite ouverture de sorte à former collectivement un entrelacement métallique recouvrant partiellement la zone d'évidement partiel.

Selon un mode de réalisation particulier, les protrusions métalliques de chaque zone d'évidement partiel forment un entrelacement dont le motif satisfait la relation de Mushiake.

Selon un mode de réalisation particulier, chaque zone d'évidement partiel comporte :
- une pluralité de protrusions métalliques formant des arcs métalliques concentriques dans la zone d'évidement partiel ; ou
- au moins une protrusion métallique s'étendant en spirale depuis un bord de la zone d'évidement partiel.

Selon un mode de réalisation particulier, les zones d'évidement partiel sont positionnées en regard l'une de l'autre.

Selon un mode de réalisation particulier, les protrusions métalliques occupent au plus 80% de la surface de chaque zone d'évidement partiel.

Selon un mode de réalisation particulier, les fentes traversantes ne s'étendent pas en regard l'une de l'autre.

Selon un mode de réalisation particulier, la carte à puce est dépourvue de matière plastique.

Selon un mode de réalisation particulier, la couche métallique supérieure, la couche métallique inférieure et l'antenne RF sont isolées électriquement les unes des autres.

Selon un mode de réalisation particulier, chaque zone d'évidement partiel est recouverte par une couche de protection électriquement isolante.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
[Fig. 1] La figure 1 est une vue schématique en coupe d'une carte à puce selon un mode de réalisation particulier de l'invention ;
[Fig. 2] La figure 2 est une vue schématique de dessus de la face avant d'une carte à puce selon un mode de réalisation particulier de l'invention ;
[Fig. 3] La figure 3 est une vue schématique en coupe d'une carte à puce selon un mode de réalisation particulier de l'invention ;
[Fig. 4] La figure 4 est une vue schématique en coupe d'une carte à puce selon un mode de réalisation particulier de l'invention ;
[Fig. 5] La figure 5 est une vue schématique en coupe d'une carte à puce selon un mode de réalisation particulier de l'invention ;
[Fig. 6] La figure 6 est une vue schématique de dessus d'une couche métallique comprenant une zone d'évidement partiel, selon un mode de réalisation particulier de l'invention ;
[Fig. 7] La figure 7 est une vue schématique de dessus d'une couche métallique comprenant une zone d'évidement partiel, selon un mode de réalisation particulier de l'invention ;
[Fig. 8] La figure 8 est une vue schématique de dessus d'une couche métallique comprenant une zone d'évidement partiel, selon un mode de réalisation particulier de l'invention ; et
[Fig. 9] La figure 9 est une vue schématique de dessus d'une couche métallique comprenant une zone d'évidement partiel, selon un mode de réalisation particulier de l'invention.

### Description des modes de réalisation

Comme indiqué précédemment, l'invention porte sur cartes à puce métalliques aptes à fonctionner en mode sans contact.

Lorsqu'une carte à puce sans contact comporte une plaque métallique ainsi qu'une antenne RF disposée sur l'une des faces de la plaque métallique, il a été observé que cette plaque métallique perturbe les communications sans contact entre l'antenne RF et l'extérieur, en particulier lorsque la plaque métallique est disposée entre l'antenne RF et le terminal externe avec lequel la carte à puce tente de communiquer, en raison du blindage électromagnétique induit par la plaque métallique. Ainsi, selon l'orientation de la carte, il est parfois impossible d'effectuer une transaction sans contact entre une carte à puce métallique et un terminal externe. La transaction est possible si l'on présente la carte à puce de sorte que l'antenne soit disposée du côté du terminal (sans que la plaque métallique s'interpose entre les deux), mais les communications RF sont perturbées, voire impossibles, si la plaque métallique forme une barrière électromagnétique entre l'antenne RF de la carte et le terminal (la plaque métallique fait office de barrière électromagnétique entre la puce RF et le terminal).

L'invention se propose de pallier les inconvénients et problèmes mentionnés ci-avant. Pour ce faire, l'invention propose une carte métallique comprenant une couche métallique supérieure et une couche métallique inférieure positionnées de part et d'autre d'une antenne radiofréquence (RF). Les couches métalliques supérieure et inférieure comportent chacune, en regard de l'antenne RF, une zone d'évidemment partiel comportant au moins une ouverture au travers de l'épaisseur de la couche métallique. Chaque zone d'évidement partiel est partiellement recouverte par au moins une protrusion métallique s'étendant depuis un bord de la zone d'évidement partiel de sorte à définir le contour de ladite au moins une ouverture.

L'invention prévoit notamment un carte à puce comprenant : une pluralité des couches métalliques comportant au moins une couche métallique supérieure et une couches métalliques inférieure disposées en regard l'une de l'autre ; une cavité interne ménagée entre les couches métalliques supérieure et inférieure ; et une antenne RF, comprenant au moins une spire conductrice, disposée dans la cavité. Les couches métalliques supérieure et inférieure comprennent chacune une zone d'évidemment partiel comme définie ci-avant, en regard de ladite au moins une spire.

Des modes de réalisation particuliers, ainsi que d'autres aspects de l'invention, sont décrits plus en détail ci-après.

Dans le présent exposé, des exemples de mises en oeuvre de l'invention sont décrits en relation avec une carte à puce configurée pour communiquer uniquement en sans contact avec l'extérieur. Pour ce faire, cette carte à puce embarque notamment d'une puce électronique connectée à une antenne RF. La puce électronique est apte à traiter des signaux et communiquer avec l'extérieur via cette antenne RF. D'autres implémentations sont toutefois possibles.

En variante, l'invention s'applique également aux cartes à puce de type « dual », c'est-à-dire des carte à double interface de communication, ayant la capacité de communiquer aussi bien en mode avec contact qu'en mode sans contact. Pour ce faire, en plus d'une antenne RF, la carte à puce est équipée de contacts externes prévus à cet effet à la surface de la carte. La carte à puce peut être conforme à la norme ISO 7816.

L'invention peut s'appliquer plus généralement à une quelconque carte à puce configurée pour communiquer en sans contact, et ce qu'elle ait ou non la capacité de fonctionner aussi en mode avec contact. La carte à puce de l'invention peut éventuellement est configurée pour fonction selon le standard EMV, bien que d'autres protocoles et configurations soient possibles.

De façon générale, la carte à puce de l'invention peut être configurée pour réaliser une transaction d'un type quelconque, telle que des transactions bancaires (transactions de paiement, de transfert, de débit...), des transactions d'authentification, etc. Il peut s'agir d'une carte bancaire, telle qu'une carte de paiement ou carte de crédit par exemple, ou encore d'badge d'accès, d'une carte de fidélité, une carte d'identité, etc..

Dans les modes de réalisation décrits ci-après, la carte à puce comprend une pluralité de couches métalliques (au moins 2). Ces couches (ou plaques) métalliques peuvent présenter diverses épaisseurs et peuvent être constituées de divers métaux (ou alliages de métaux). En particulier, les couches métalliques de la carte à puce peuvent être constituée d'un seul métal, tel que de l'aluminium par exemple, ou d'un alliage de plusieurs métaux différents. Ces couches métalliques peuvent comprendre une pluralité de sous-couches métalliques.

Un but de l'invention est de permettre à la carte à puce de présenter un poids relativement important par rapport à une carte à puce traditionnelle dont le corps de carte est en plastique. En jouant sur l'épaisseur et la taille des plaques métalliques, ainsi que sur les métaux utilisés, on peut ainsi adapter le poids de la carte à puce de façon appropriée.

Sauf indications contraires, les éléments communs ou analogues à plusieurs figures portent les mêmes signes de référence et présentent des caractéristiques identiques ou analogues, de sorte que ces éléments communs ou analogues ne sont généralement pas à nouveau décrits par souci de simplicité.

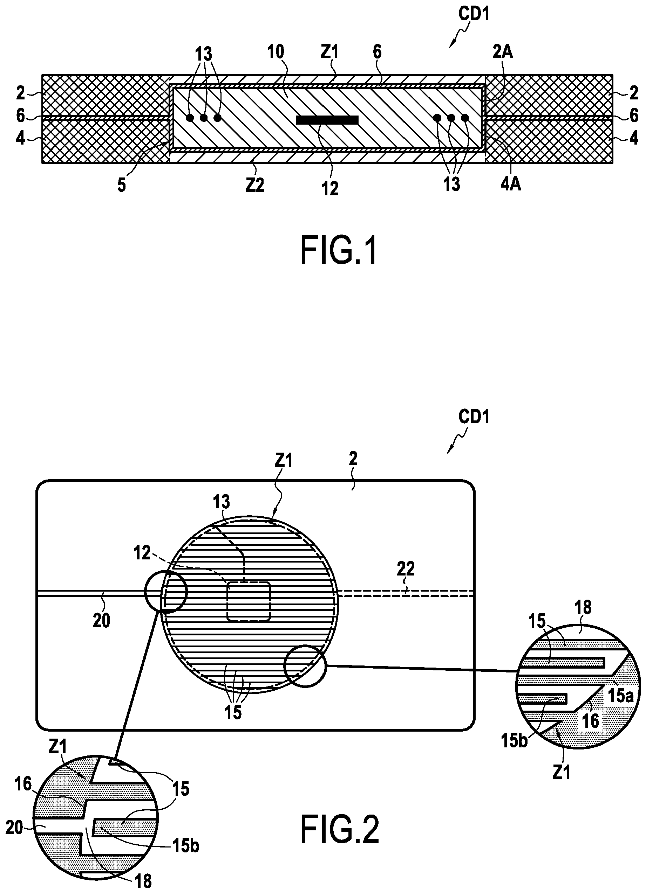

Une carte à puce CD1 selon un premier mode de réalisation est à présent décrite en référence aux **figures 1** et **2**. Selon cet exemple, la carte à puce CD1 comprend une couche métallique supérieure 2 et une couche métallique inférieure 4 disposées en regard l'une de l'autre. Ces deux couches (ou plaques) métalliques 2, 4 sont assemblées ensemble pour former le corps de la carte à puce CD1. Ce corps de carte est par exemple de format ID-1 selon la norme ISO7816, d'autres formats étant toutefois possibles.

Une cavité interne (ou logement interne) 5 est ménagée entre les couches métalliques supérieure et inférieure 2, 4. Dans cet exemple, les couches métalliques 2 et 4 comportent respectivement des renfoncements 2a, 4a qui délimitent collectivement la cavité interne 5. En variante, selon l'une quelconque parmi les couches métalliques 2 et 4 présente un tel renfoncement.

La carte à puce CD1 comprend également une antenne RF 13 disposée dans la cavité interne 5. Plus particulièrement, un module (ou insert) 10 comportant l'antenne RF 13 est positionnée dans la cavité interne 5.

L'antenne RF 13 comprend une ou une pluralité de spires électriquement conductrices permettant d'établir une communication sans contact (RF) avec l'extérieur, par exemple avec un terminal externe (non représenté) prévu à cet effet. Les spires de l'antenne RF 13 peuvent être formées par une piste, un fil ou un membre électriquement conducteur déposé sur un support (non représenté). Diverses techniques de fabrication (filaire, par dépôt, par gravure) bien connues en soi peuvent être utilisées pour réaliser une telle antenne RF. Les caractéristiques physiques (forme/taille de l'intersection, longueur de l'antenne, nombre de spire, matériau, etc.) de l'antenne RF 13 peuvent être adaptées au cas par cas afin notamment de permettre des communications sans fil à la fréquence (ou plage de fréquences) souhaitée.

La carte à puce CD1 comprend également une puce électronique (ou microcircuit) 12 qui est connectée électriquement à l'antenne RF 13 afin de pouvoir communiquer en sans contact avec l'extérieur. Dans cet exemple de réalisation, la puce électronique 12 est comprise dans le module d'antenne 10, bien que d'autres implémentations soient possibles. La puce électronique 12 comprend des moyens de traitement pour traiter des signaux RF échangés avec un terminal externe via l'antenne RF 13.

Par ailleurs, la couche métallique supérieure 2 et la couche métallique inférieure 4 comprennent chacune une zone d'évidemment partiel - notée respectivement Z1 et Z2 - positionnée en regard (au-dessus et en-dessous, respectivement) des spires électriquement conductrices de l'antenne RF 13. Autrement dit, les zones d'évidement partiel Z1 et Z2 font face à l'antenne RF 13. Il n'est en revanche pas obligatoire que ces zones Z1, Z2 présentent une forme générale identique ou analogue à celle de l'antenne RF 13. Il n'est également pas obligatoire que les zones d'évidement partiel Z1 et Z2 soient exactement alignés.

Les zones d'évidement partiel Z1, Z2 comportent chacune au moins une ouverture traversante 18, à savoir au moins une ouverture (ou évidemment, ou perforation) au travers de l'épaisseur de la couche métallique (2 ou 4). Chacune de ces zones d'évidement partiel Z1, Z2 est partiellement recouverte par au moins une protrusion métallique 15 s'étendant depuis un bord de ladite zone d'évidement partiel de sorte à définir le contour de la ou des ouvertures traversantes 18. Ainsi, les spires de l'antenne RF 13 sont partiellement recouvertes par les protrusions métalliques 15 des zones d'évidement partiel Z1, Z2, et sont partiellement en regard avec au moins une ouverture traversante 18 de chaque zone d'évidement partiel Z1, Z2.

De manière générale, une protrusion métallique au sens de l'invention peut être une quelconque partie ou membre métallique qui s'étend sous la forme d'une saillie (ou protubérance, ou doigt) depuis un bord de la zone d'évidement partiel. Comme indiqué ci-après, la forme et les dimensions de chaque protrusion peuvent être adaptées par l'homme du métier au cas par cas.

Le positionnement de telles zones d'évidement partiel Z1, Z2 en regard de l'antenne RF 13 permet avantageusement d'établir une communication RF de l'antenne RF 13 au travers des zones d'évidement partiel Z1, Z2, sans perturber le flux magnétique de l'antenne RF et ce, quelle que soit son orientation. Le flux magnétique de l'antenne RF 13 est capable de traverser les zones d'évidement partiel Z1, Z2 au travers des ouvertures traversantes 18. En outre, la présence d'une ou de multiples protrusions métalliques 15 dans chaque zone d'évidement partiel permet d'assurer l'intégrité physique et la bonne robustesse de la carte à puce sans que ce soit préjudiciable pour le bon fonctionnement de l'antenne RF 13. Un utilisateur peut ainsi utiliser sa carte à puce en mode sans contact pour interagir avec un terminal externe, sans se soucier de l'orientation de la carte à puce. Des avantages techniques analogues sont obtenus dans les autres modes de réalisation et variantes décrits ci-après.

Comme cela apparaît dans l'ensemble de la divulgation, diverses configurations de protrusions métalliques et d'évidement sont possibles dans le cadre de la présente invention. En particulier, les zones d'évidement partiel au sens de l'invention peuvent présenter divers motifs (ou géométries) définis par la ou les protrusions métalliques 15. Dans l'exemple représenté en **figure 2****,** on suppose que les zones d'évidement partiel Z1 et Z2 sont identiques bien que des variantes soient possibles dans lesquelles le motif des zones d'évidement partiel Z1 et Z2 diffèrent. Ce qui est décrit ci-après en référence à la zone d'évidement partiel Z1 s'applique donc de façon analogue à la zone d'évidement partiel Z2.

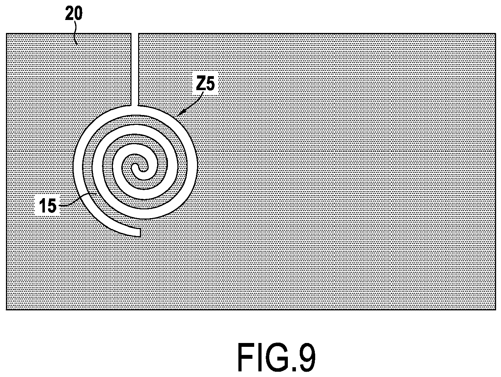

On suppose également que les zones d'évidement partiel Z1 et Z2 comportent chacune une pluralité de protrusions métalliques 15, bien que des variantes soient possibles où une unique protrusion métallique 15 recouvre partiellement l'une quelconque ou les deux zones d'évidement partiel Z1, Z2 pour définir au moins une ouverture traversante 18, comme décrit ultérieurement (cf. par exemple **figure 9**).

Les protrusions métalliques 15 forment dans l'exemple de la **figure 2** et dans les autres exemples ci-après des « doigts », à savoir des parties allongées, qui s'étendent en regard d'une partie de l'antenne RF 13 (donc en regard d'une partie d'au moins une spire). La forme et la longueur des protrusions métalliques 15 peuvent être adaptées par l'homme du métier selon le cas. Dans l'exemple considéré ici, les protrusions métalliques 15 sont rectilignes, des variantes étant décrites ci-après.

Dans l'exemple particulier représenté en **figure 2****,** les protrusions 15 s'étendent dans la zone d'évidement partiel Z1 depuis un bord 16 de sorte à délimiter le contour d'une unique ouverture traversante 18 au travers de l'épaisseur de la couche métallique supérieure 2. Cette unique ouverture 18 présente ici une forme complexe (en zigzag) qui serpente entre les protrusions 15. La forme et le nombre d'ouvertures 18 peuvent toutefois varier selon la configuration des protrusions 15 qui est adoptée. Selon une variante, les zones d'évidement partiel Z1, Z2 comprennent une pluralité d'ouvertures traversantes 18 dont le contour est défini par la ou les protrusions métalliques 15.

Dans l'exemple représenté en **figure 2****,** les protrusions métalliques 15 de la zone d'évidemment partiel Z1 sont séparées les unes des autres par l'unique ouverture traversante 18 de sorte à former collectivement un entrelacement métallique recouvrant partiellement la zone d'évidement partiel Z1. Selon une variante, les protrusions métalliques 15 de la zone d'évidemment partiel Z1 sont séparées les unes des autres par une pluralité d'ouvertures traversantes 18 de sorte à former collectivement un entrelacement métallique recouvrant partiellement la zone d'évidement partiel Z1. De façon générale, l'entrelacement métallique des protrusions métalliques 15 forme un motif dont la nature peut varier selon le cas.

En outre, comme représenté en **figure 2****,** chaque protrusion métallique 15 s'étend dans cet exemple depuis son extrémité proximale 15a dans l'une des zones d'évidement partiel Z1, Z2 de sorte que son extrémité distale 15b soit libre, c'est-à-dire à distance non nulle du bord 15 de ladite zone d'évidement partiel. Dans un exemple particulier, chaque protrusion métallique 15 se termine à sa partie distale 15b à distance (non nulle) vis-à-vis des autres protrusions métalliques 15 et vis-à-vis du bord 16 de la zone d'évidement Z1, Z2. L'espacement non nul entre la partie distale 15b des protrusions métalliques 15 vis-à-vis du bord de la zone d'évidement partiel Z1, Z2 (et éventuellement aussi vis-à-vis des autres protrusions métalliques 15) permet d'établir des circuits ouverts entre les protrusions métalliques 15 et le reste de la couche métallique considérée 2, 4. Cette configuration permet avantageusement d'éviter la création de courants de Foucault dans la région critique des zones d'évidement partiel Z1, Z2. En évitant de créer des courants de Foucault, on évite ainsi avantageusement de perturber les communications sans contact de l'antenne RF 13 au travers des zones d'évidement partiel Z1, Z2 avec l'extérieur.

Dans l'exemple considéré ici, les protrusions 15 font partie intégrante des couches métalliques supérieure ou inférieure 2, 4 respectivement. En variante, les protrusions 15 peuvent être des éléments ajoutés qui sont fixés aux couches métalliques supérieure et inférieure 2, 4, au niveau du bord 16 des zones d'évidement partiel respectives Z1, Z2.

Les protrusions métalliques 15 peuvent être formées de diverses manières, par exemple par emboutissage directement dans la matière des couches métalliques 2, 4. Selon un mode de réalisation particulier, les protrusions 15 dans les zones d'évidement partiel Z1 et Z2 sont formées par gravure laser ou par gravure mécanique. Le métal des couches métalliques 2 et 4 est ainsi gravé de sorte à réaliser la ou les ouvertures traversantes 18 délimitant le contour des protrusions métalliques 15.

Dans l'exemple représenté en **figures 1** et **2****,** les zones d'évidement partiel Z1 et Z2 sont positionnées en regard l'une de l'autre, l'antenne RF 13 étant interposée entre ces deux zones, de façon à permettre une bonne communication de l'antenne RF avec l'extérieur et de sorte à ce que le comportement de l'antenne RF soit uniforme quelle que soit l'orientation de la carte à puce CD1 vis-à-vis d'un terminal externe avec lequel elle interagit. Des variantes d'implémentations sont toutefois possibles dans lesquelles les zones d'évidement partiel Z1 et Z2 ne sont pas alignées (se font face partiellement).

Dans l'exemple représentées en **figures 1** et **2****,** les zones d'évidement partiel Z1, Z2 présentent une forme générale circulaire. D'autres formes sont toutefois possibles.

Par ailleurs, comme représenté en **figure 1**, l'antenne RF 13 (et plus précisément le module d'antenne 10 dans cet exemple) est isolée électriquement des couches métalliques supérieure et inférieure 2, 4 (y compris les zones d'évidement partiel Z1, Z2) au moyens d'une glue (ou colle) 6 électriquement isolante qui fixe ensemble tous ces éléments. Cette isolation électrique 6 permet d'éviter que le métal avoisinant l'antenne RF 13 perturbe celle-ci dans son fonctionnement. D'autres façons d'isoler électriquement l'antenne RF 13 peuvent toutefois être envisagées. En variante, tout matériau 6 électriquement isolant (matériau plastique, matériau diélectrique) peut être disposé autour de l'antenne RF 13 (c.-à-d. autour du module d'antenne 10) pour l'isoler électriquement des couches métalliques de la carte à puce. Des couches 6 de matériau électriquement isolant peuvent ainsi être disposées à l'interface entre le module d'antenne 10 et les deux couches métalliques 2 et 4 (y compris entre le module d'antenne 10 et les zones d'évidement partiel Z1 et Z2).

Un matériau électriquement isolant (non représenté) peut également être disposé de sorte à recouvrir les couches métalliques supérieure et inférieure 2, 4, ou du moins les zones d'évidement partiel Z1, Z2. Selon un exemple particulier, chaque zone d'évidement partiel Z1, Z2 est recouverte par une couche de protection électriquement isolante. En isolant ainsi les faces externes de la carte à puce CD1, on limite les risques de courts-circuits notamment en raison de la présence des courants de Foucault dans les zones d'évidement partiel Z1, Z2 (par exemple à cause de la présence d'une goutte d'eau entre les protrusions métalliques 15).

D'autre part, comme représenté en **figure 2****,** les couches métalliques supérieure et inférieure 2, 4 comprennent chacune une fente traversante notée respectivement 20, 22. Ces fentes traversantes 20, 22 s'étendent respectivement depuis la zone d'évidement partiel Z1 et Z2 jusqu'à un bord périphérique des couche métalliques supérieure et inférieure 2, 4, de sorte à éviter la formation de courants de Foucault. Pour ce faire, chaque fente traversante 20, 22 débouche sur une ouverture traversante 18 (à savoir l'unique ouverture 18 dans le cas présent) de la zone d'évidement partiel Z1, Z2 correspondante. Chaque fente traversante 20, 22 prolonge ainsi une ouverture 18 jusqu'à un bord périphérique de la couche métallique 2 ou 4. Selon un exemple particulier, les fentes traversantes 20, 22 débouchent respectivement sur les zones d'évidement partiel Z1, Z2 de sorte à être positionnée en regard de l'extrémité distale 15b d'une protrusion métallique 15. La forme et la configuration des fentes traversantes 20, 22 peuvent varier selon le cas. La formation de telles fentes traversantes permet avantageusement de diminuer ou d'empêcher la formation de courants de Foucault susceptibles de perturber le bon fonctionnement de l'antenne RF 13. En effet, ces fentes limitent les principales boucles de courant de Foucault susceptibles d'être générées autour de l'antenne RF 13.

Les fentes traversantes 20, 22 sont par exemple disposées de sorte à être opposées l'une de l'autre par rapport à l'antenne RF 13. Les fentes traversantes 20, 22 s'étendent par exemple par exemple de façon à déboucher sur des côtés (ou bords) opposés du corps de la carte à puce CD1. Les fentes traversantes 20, 22 peuvent être rectilignes ou présenter des formes plus complexes. L'isolation électrique 6 permet d'éviter que les bords opposés de la fente traversante 20 (et respectivement de la fente traversante 22) soient directement en court-circuit en raison de la couche métallique 4 (et respectivement la couche métallique 2) située à proximité.

De manière générale, il est préférable que les fentes traversantes 20 et 22 ne s'étendent pas en regard l'une de l'autre, comme par exemple dans le cas de la **figure 2**. Autrement dit, il est préférable que ces fentes soient désalignées l'une par rapport à l'autre afin de préserver l'intégrité physique et la robustesse de la carte à puce CD1.

A noter que dans l'exemple représenté en **figure 2****,** les fentes traversantes 20, 22 sont ménagées dans les couches métalliques supérieure et inférieure formant le corps de la carte à puce CD1. Comme décrit ci-après, des variantes sont possibles selon lesquelles une ou des fentes traversantes analogues aux fentes 20, 22 sont ménagées dans une ou des couches métalliques autres que celles comportant les zones d'évidement partiel Z1, Z2. Comme indiqué ci-après, d'autres implémentations sont possibles dans lesquelles la carte à puce comprend une ou plusieurs couches métalliques additionnelles qui, bien que ne comportant pas de zone d'évidement partiel, comportent également au moins une fente traversante. Selon un exemple particulier, chaque couche métallique s'étendant jusqu'au bord périphérique de la carte à puce comprend au moins une telle fente traversante pour limiter les courants de Foucault.

Selon une variante, seule l'une quelconque parmi les couches métalliques supérieure et inférieure 2 et 4 comporte une telle fente traversante. Des modes de réalisation sont également possibles dans lesquelles aucune fente traversante 20, 22 n'est réalisée dans la carte à puce CD1.

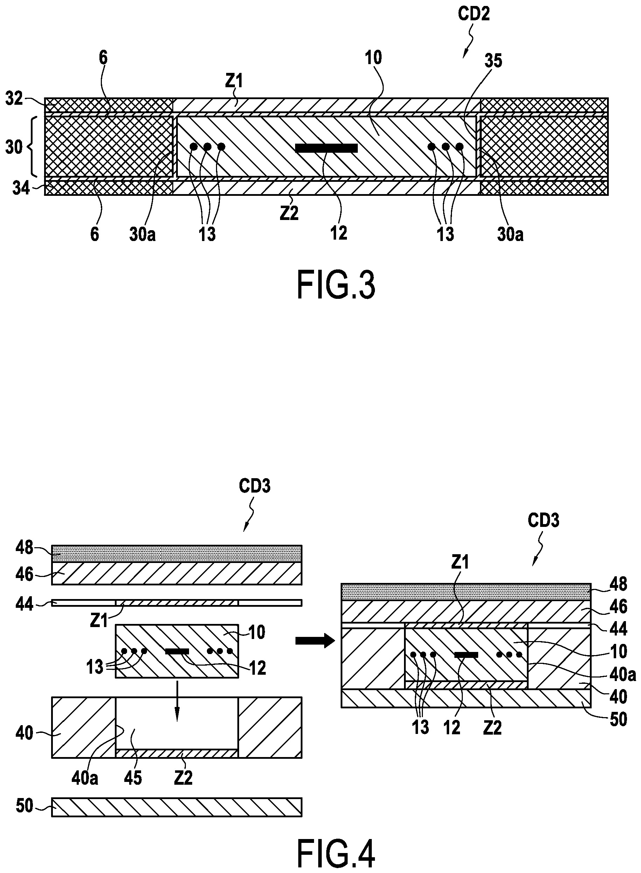

Des variantes de réalisation sont à présent décrites en référence aux **figures 3-****9**. Les différentes caractéristiques et variantes (concernant notamment les zones d'évidemment partiel, l'antenne RF, l'isolation électrique et les éventuelles fentes traversantes) décrites ci-avant en référence aux **figures 1** et **2****,** ainsi que les techniques de fabrication associées (en particulier pour l'antenne RF et les zones d'évidement partiel), peuvent s'appliquer de façon analogue aux variantes ci-après.

La **figure 3** représente schématiquement en vue de coupe une carte à puce CD2 selon un mode réalisation particulier de l'invention.

La carte à puce CD2 comprend une couche métallique supérieure 32 et une couche métallique inférieure 34. Une couche métallique intermédiaire 30 est interposée entre les couches métalliques supérieure et inférieure 32, 34. Cette couche métallique intermédiaire 30 comprend une ouverture traversante 30a qui délimite une cavité interne 35 de la carte à puce CD2.

Une antenne RF 13 comme décrite précédemment en référence aux **figures 1** et **2** est en outre disposée dans la cavité 35 ménagée dans la couche métallique intermédiaire 30. Dans cet exemple, un module (ou insert) 10 comprenant l'antenne RF 13 est ainsi positionnée dans la cavité interne 35. L'antenne RF 13 est connectée électriquement à une puce électronique 12 présente dans le corps de la carte à puce CD2 (dans cet exemple la puce électronique 12 est comprise dans le module d'antenne 10). Comme déjà décrit, l'antenne RF 13 comprend au moins une spire électriquement conductrice pour permettre à la puce électronique de communiquer en sans contact avec l'extérieur de la carte.

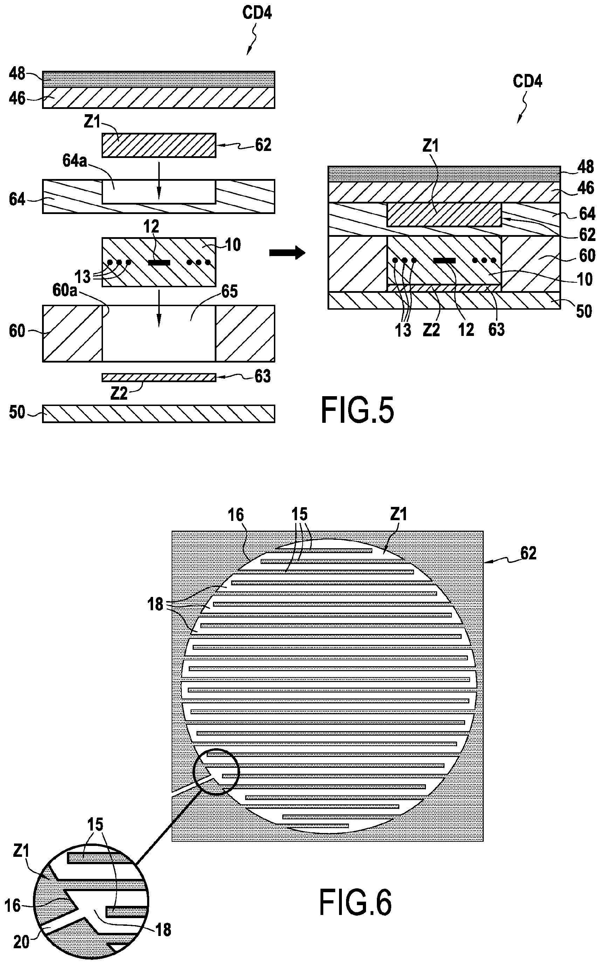

Les couches métalliques supérieure et inférieure 32, 34 comportent respectivement des zones d'évidement partiel Z1, Z2 en regard des spires de l'antenne RF 13. Les zones d'évidement partiel Z1 et Z2 sont généralement comme déjà décrites en référence au mode de réalisation des **figures 1** et **2**. En particulier, chaque zone d'évidement partiel Z1, Z2 comporte au moins une ouverture traversant au travers de l'épaisseur de la couche métallique correspondante 32, 34. En outre, chaque zone d'évidement partiel Z1, Z2 est partiellement recouverte par au moins une protrusion métallique 15 s'étendant depuis un bord 16 de la zone d'évidement partiel Z1, Z2 de sorte à définir le contour de ladite au moins une ouverture traversante 18. Les zones d'évidement partiel Z1, Z2 peuvent présenter un motif identique ou différent, par exemple tel que le motif représenté en **figure 2** ou dans les **figures 6** à **8** décrites ci-après.

Le mode de réalisation de la **figure 3** diffère donc principalement des **figures 1** et **2** en ce qu'une couche métallique intermédiaire 30 disposée entre les couches métalliques supérieure et inférieure forme la cavité interne accueillant l'antenne RF 13. Les configurations et variantes décrites ci-avant en référence aux **figures 1** et **2** (concernant notamment la configuration des zones d'évidement partiel et de l'antenne RF) s'appliquent par analogie au mode de réalisation de la **figure 3****.**

Dans l'exemple représenté en **figure 3****,** l'isolation électrique entre l'antenne RF 13 et le métal avoisinant est assuré par un matériau isolant 6 comme déjà décrit précédemment en référence aux **figures 1** et **2** (par exemple une glue isolante ou un matériau diélectrique) qui est interposé entre la couche métallique intermédiaire 30 et la couche métallique supérieure 32 d'une part, et entre la couche métallique intermédiaire 30 et la couche métallique inférieure 34 d'autre part.

En équipant ainsi la carte à puce D2 de zones d'évidement partiel Z1, Z2, la puce électronique est capable de communiquer efficacement avec l'extérieur en mode sans contact sans que l'antenne RF 13 soit perturbée par les couches métalliques de la carte à puce CD2. Les flux magnétiques peuvent être échangés entre l'antenne RF 13 et l'extérieur via les zones d'évidement partiel Z1, Z2, tout en assurant l'intégrité physique et la robustesse de la carte à puce CD2.

Il est possible d'adapter l'épaisseur des couches métalliques afin d'obtenir une carte à puce CD2 de poids approprié.

A noter que des fentes traversantes (non représentées) peuvent également être ménagées dans les couches métalliques supérieure et inférieure 32, 34 et dans la couche métallique intermédiaire 30 de façon analogue aux fentes traversantes 20, 22 précédemment décrites en référence aux **figures 1** et **2**. Ainsi, les couches métalliques 30, 32 et 34 peuvent chacune comprendre une fente traversante s'étendant depuis respectivement la zone d'évidement partiel Z1 et Z2 jusqu'à un bord périphérique desdites couches métalliques de sorte à éviter la formation de courants de Foucault susceptibles de perturber le bon fonctionnement de l'antenne RF 13, comme déjà décrit. Dans les couches métalliques supérieure et inférieure 32 et 34, les fentes traversantes débouchent chacune sur une ouverture traversante 18 de la zone d'évidement partiel correspondante Z1, Z2. Dans la couche métallique intermédiaire 30, la fente traversante débouche dans l'ouverture traversante 30a (donc sur la cavité 35).

La **figure 4** représente schématiquement en vue de coupe une carte à puce CD3 selon un mode réalisation particulier de l'invention.

La carte à puce CD3 comprend une couche métallique supérieure 44 et une couche métallique inférieure 40 positionnées en regard l'une de l'autre. Les couches métalliques supérieure et inférieure 44, 40 comprennent respectivement une zone d'évidement partiel Z1, Z2 positionnée en regard des spires de l'antenne RF 13. Les zones d'évidement partiel Z1 et Z2 sont généralement comme déjà décrites en référence au mode de réalisation des **figures 1** et **2**.

En particulier, chaque zone d'évidement partiel Z1, Z2 comporte au moins une ouverture traversante 18 au travers de l'épaisseur de la couche métallique correspondante 32, 34. En outre, chaque zone d'évidement partiel Z1, Z2 est partiellement recouverte par au moins une protrusion métallique 15 s'étendant depuis un bord 16 de la zone d'évidement partiel Z1, Z2 de sorte à définir le contour de ladite au moins une ouverture traversante 18. Les zones d'évidement partiel Z1, Z2 peuvent présenter un motif identique ou différent, par exemple tel que le motif représenté en **figure 2** ou dans les **figures 6** à **8** décrites ci-après.

Dans cet exemple, la zone d'évidement partiel Z2 fait partie intégrante de la couche métallique inférieure 40. En variante, la zone d'évidement partiel Z2 est une couche métallique distincte de la couche métallique inférieure 40, ces deux couches métalliques étant fixées l'une à l'autre par tout moyen approprié de sorte à former ensemble une même couche (ou plaque) métallique.

Comme représenté en **figure 4****,** la couche métallique inférieure 40a comprend ici un renfoncement 40a qui définit une cavité interne 45 dans laquelle est disposée une antenne RF 13 comme déjà décrite précédemment en référence aux **figures 1** et **2**.

De même que dans les précédents exemples, un module (ou insert) 10 comprenant l'antenne RF 13 est ainsi positionné dans la cavité interne 45. L'antenne RF 13 est connectée électriquement à une puce électronique 12 présente dans le corps de la carte à puce CD3 (dans cet exemple la puce électronique 12 est comprise dans le module d'antenne 10). Comme déjà décrit, l'antenne RF 13 comprend au moins une spire électriquement conductrice pour permettre à la puce électronique de communiquer en sans contact avec l'extérieur de la carte.

Les configurations et variantes décrites ci-avant en référence aux **figures 1** et **2** (concernant notamment la configuration des zones d'évidement partiel et de l'antenne RF) s'appliquent par analogie au mode de réalisation de la **figure 4****.**

Une couche imprimée 46 peut éventuellement être disposée sur la face supérieure de la couche métallique supérieure 44 afin de personnaliser l'aspect visuel de la carte à puce CD3. Dans cet exemple, des couche de protection électriquement isolante 48 et 50 sont en outre positionnées de sorte à recouvrir les faces externes de la couche imprimée 46 (et, à défaut, de la couche métallique supérieure 44) et de la couche métallique inférieure 40, respectivement.

A noter que des fentes traversantes (non représentées) peuvent également être ménagées dans les couches métalliques supérieure et inférieure 44, 40 de façon analogue aux fentes traversantes 20, 22 précédemment décrites en référence aux **figures 1** et **2**. Ainsi, les couches métalliques supérieure et inférieure 44, 40 peuvent chacune comprendre une fente traversante s'étendant depuis respectivement la zone d'évidement partiel Z1 et Z2, jusqu'à un bord périphérique des couches métalliques supérieure et inférieure 44, 40 de sorte à éviter la formation de courants de Foucault susceptibles de perturber le bon fonctionnement de l'antenne RF 13, comme déjà décrit. Dans les couches métalliques supérieure et inférieure 40 et 44, les fentes traversantes débouchent chacune sur une ouverture traversante 18 de la zone d'évidement partiel correspondante Z1, Z2, respectivement.

Les **figures 5** et **6** représentent schématiquement en vue de coupe une carte à puce CD4 selon un mode de réalisation particulier de l'invention.

La carte à puce CD4 comprend une couche métallique supérieure 62 et une couche métallique inférieure 63 positionnées en regard l'une de l'autre. Les couches métalliques supérieure et inférieure 62, 63 comprennent respectivement une zone d'évidement partiel Z1, Z2 positionnée en regard des spires de l'antenne RF 13.

Les zones d'évidement partiel Z1 et Z2 sont généralement comme déjà décrites en référence au mode de réalisation des **figures 1** et **2**.

En particulier, chaque zone d'évidement partiel Z1, Z2 comporte au moins une ouverture traversante 18 au travers de l'épaisseur de la couche métallique correspondante 32, 34. En outre, chaque zone d'évidement partiel Z1, Z2 est partiellement recouverte par au moins une protrusion métallique 15 s'étendant depuis un bord 16 de la zone d'évidement partiel Z1, Z2 de sorte à définir le contour de ladite au moins une ouverture traversante 18. Les zones d'évidement partiel Z1, Z2 peuvent présenter un motif identique ou différent, par exemple tel que le motif représenté en **figure 2** ou dans les **figures 6** à **8** décrites ci-après.

La **figure 6** représente la couche métallique supérieure 62 comportant la zone d'évidement partiel Z1, selon un exemple particulier. La couche métallique inférieure 63 peut présenter une structure (et notamment un motif) analogue à celle de la couche métallique supérieure 62.

La carte à puce CD4 comprend en outre une couche métallique intermédiaire 60 comprenant une ouverture traversante 60a qui forme une cavité interne 65 entre les zones d'évidement partiel Z1 et Z2. Au sein de cette cavité 65 est disposée une antenne RF 13, comme déjà décrite précédemment en référence notamment aux **figures 1** et **2**. De même que dans les précédents exemples, un module (ou insert) 10 comprenant l'antenne RF 13 est ainsi positionné dans la cavité interne 65. L'antenne RF 13 est connectée électriquement à une puce électronique 12 présente dans le corps de la carte à puce CD4 (dans cet exemple la puce électronique 12 est comprise dans le module d'antenne 10). Comme déjà décrit, l'antenne RF 13 comprend au moins une spire électriquement conductrice pour permettre à la puce électronique de communiquer en sans contact avec l'extérieur de la carte.

Les configurations et variantes décrites ci-avant en référence aux **figures 1** et **2** (concernant notamment la configuration des zones d'évidement partiel et de l'antenne RF) s'appliquent par analogie au mode de réalisation de la **figure 4****.**

Dans cet exemple, la couche métallique supérieure 62 comportant la zone d'évidement partiel Z1 ne s'étend pas dans tout le corps de la carte à puce CD4 et n'est pas directement en contact avec la couche métallique intermédiaire 60. La couche métallique 62 présente toutefois une taille suffisante pour que sa zone d'évidement partiel Z1 recouvre l'antenne RF 13 (ou du moins une partie substantielle des spires de l'antenne). Une couche diélectrique intermédiaire 64 est interposée entre la couche métallique supérieure 62 et la couche métallique intermédiaire 60. Cette couche diélectrique intermédiaire 64 s'étend dans tout le corps de carte et forme un renfoncement 64a dans lequel est disposée la couche métallique supérieure 62 comportant la zone d'évidement partiel Z1.

En outre, la couche métallique inférieure 63 est fixée à la couche métallique intermédiaire 60 de sorte à recouvrir la cavité interne 65 depuis la face inférieure de la couche métallique intermédiaire 60. En variante, la couche métallique inférieure 63 fait partie intégrante de la couche métallique intermédiaire 60.

A noter que des fentes traversantes (non représentées) peuvent également être ménagées dans la couche métallique intermédiaire 60 et dans la couche métallique 62 de façon analogue aux fentes traversantes 20, 22 précédemment décrites en référence aux **figures 1** et **2**. Dans cet exemple, une fente traversante s'étend dans la couche métallique intermédiaire 60 et se prolonge dans la couche métallique 62, depuis un bord périphérique de la couche métallique intermédiaire 60 jusqu'à la zone d'évidement partiel Z2, de sorte à éviter la formation de courants de Foucault susceptibles de perturber le bon fonctionnement de l'antenne RF 13, comme déjà décrit. De même, une fente traversante s'étend dans la couche métallique 62 depuis un bord périphérique de la couche métallique jusqu'à la zone d'évidement partiel Z1. Ces deux fentes traversantes débouchent ainsi sur une ouverture traversante 18 des zones d'évidement partiel Z1, Z2 respectivement.

A noter également que, dans les différents modes de réalisation décrites ci-avant, l'antenne RF 13 est isolée électriquement des couches métalliques de la carte à puce, de façon analogue à ce qui est décrit en référence à la **figure 1** ou **3** par exemple.

Comme cela apparaît des exemples de réalisation précédents, de nombreuses configurations mettant en oeuvre des zones d'évidement partiel de part et d'autre d'une antenne RF sont possibles pour réaliser une carte à puce métallique apte à fonctionner en sans contact.

Selon un exemple particulier, les protrusions métalliques 15 présentent des formes complémentaires les unes par rapport aux autres de sorte à former un motif dit « complémentaire » ou « auto-complémentaire ». Ce motif peut présenter une symétrie en translation ou en rotation, de sorte qu'il soit identique lorsque l'on opère respectivement une translation ou une rotation. Ce motif satisfait par exemple la relation de Mushiake bien connue de l'homme du métier (cf. par exemple Wikipedia : https://en.wikipedia.org/wiki/Self-complementary_antenna; également la publication : « Y. Mushiake, 'Self-Complementary Antennas-Principle of Self-Complementarity for Constant impedance-, » 139 pages, Springer-Verlag London Ltd., London, 1996, notamment pages 75-80, ISBN: 978-3-540-76002-3.). Ainsi, les protrusions métalliques 15 de chaque zone d'évidement partiel Z1 et Z2 peuvent former un entrelacement dont le motif satisfait la relation de Mushiake, d'autres motifs étant toutefois possibles. Il a été observé que de tels motifs, par exemple ceux respectant la relation de Mushiake, permettent de limiter efficacement les courants de Foucault susceptibles de perturber le fonctionnement de l'antenne RF.

Comme indiqué ci-avant, les zones d'évidement partiel ménagées dans des couches métalliques positionnées de part et d'autre de l'antenne RF permettent avantageusement la transmission des flux magnétiques entre l'antenne RF et l'extérieur (par exemple avec un terminal externe disposant d'une antenne RF adéquate). La ou les protrusions métalliques 15 s'étendent dans ces zones d'évidement partiel de sorte à les recouvrir partiellement. Le taux de recouvrement (ou taux de remplissage) TR de chaque zone d'évidement partiel définit la proportion de surface recouverte par la ou les protrusions métalliques 15 par rapport à la surface total de la zone d'évidement partiel considérée. Selon un exemple particulier, chaque zone d'évidement partiel est configurée de sorte que son taux de recouvrement soit tel que TR ≤ 80 %, voire même TR ≤ 70 %. Autrement dit, la ou les protrusions métalliques 15 de chaque zones d'évidement Z1, Z2 occupent une surface cumulée inférieure ou égale à 80 %, voire à 70 %, de la surface totale de chaque zone d'évidement (TR ≤ 80 %), ce qui permet de garantir un bon fonctionnement de l'antenne RF au travers des zones d'évidement partiel (avec un taux de recouvrement TR non nul (TR > 0) pour garantir un minimum de robustesse à la carte à puce). Selon un exemple particulier, le taux de recouvrement de chaque zone d'évidement partiel est tel que TR est égal ou substantiellement égal à 50%, afin d'assurer un bon compromis entre robustesse de la carte à puce et un bon fonctionnement de l'antenne RF au travers des zones d'évidement partiel.

Les **figues 7, 8** et **9** représentent des exemples de motifs que peuvent former des zones d'évidement partiel au sens de l'invention.

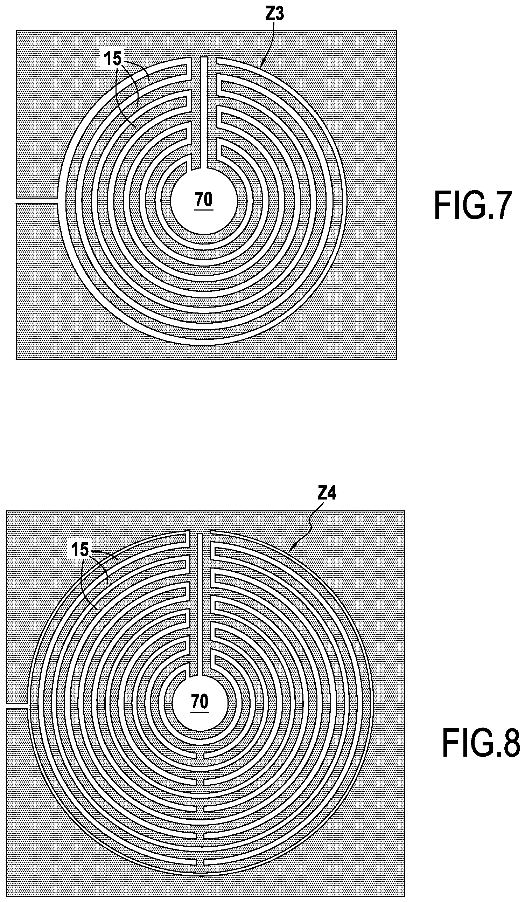

Selon un exemple particulier, chaque zone d'évidement partiel (ou au moins l'une quelconque d'entre elles) comporte une pluralité de protrusions métalliques 15 formant des arcs métalliques concentriques dans la zone d'évidement partiel. Des zones d'évidement partiel Z3 et Z4 présentant un tel motif sont représentées à titre d'exemple dans les **figures 7** et **8****,** respectivement.

Les arcs métalliques concentriques peuvent former une ouverture centrale 70 de forme circulaire dans la zone d'évidement partiel.

Selon un exemple particulier, chaque zone d'évidement partiel (ou au moins l'une quelconque d'entre elles) comprend une unique protrusion métallique formant un doigt en regard d'au moins une partie de ladite au moins une spire d'antenne.

Selon un autre exemple particulier, chaque zone d'évidement partiel (ou au moins l'une quelconque d'entre elles) comporte une ou plusieurs protrusions métalliques 15 qui s'étendent en spirale depuis un bord de la zone de la zone d'évidement considérée. Une zone d'évidement partiel Z5 comportant une unique protrusions métalliques 15 en forme de spirale est représentée à titre d'exemple dans la **figure 9**. Dans cet exemple particulier, la protrusion métallique 15 s'étend vers l'intérieure de la zone d'évidement partiel Z5 de sorte à maintenir un écart constant non nul en toute section avec les sections adjacentes de ladite protrusion métallique.

Les configurations particulières en arcs concentriques et en spiral permettent avantageusement de laisse passer le flux magnétique entre l'antenne RF et l'extérieur tout en évitant la formation indésirable de courants de Foucault qui pourraient perturber le bon fonctionner de l'antenne.

Comme déjà indiqué, un but de l'invention est de permettre à une carte à puce métallique apte à fonctionner en sans contact de présenter un aspect général et un poids attractif, d'assurer une bonne robustesse de l'ensemble et tout en garantissant un bon fonctionnement de l'antenne RF quelle que soit son orientation. Il a notamment été observé que la présence de matière plastique dans une carte à puce métallique peut être source de fragilité pour la carte. En effet, au cours de son utilisation, une carte à puce peut être exposée à des conditions climatiques (température, humidité, etc.) très poussées. Des couches métalliques et des couches plastiques au sein d'une même carte à puce répondront différemment à de tels stress environnementaux, ce qui aura pour conséquence de fragiliser la carte à puce (risques de délamination, etc.). Aussi, selon un exemple particulier, la carte à puce de l'invention est dépourvue de matière plastique ou, tout du moins, est dépourvue de couche en matière plastique, de sorte à optimiser le poids de la carte et d'assurer une bonne robustesse face aux conditions climatiques.

Un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier.

## Revendications

1. Carte à puce (CD1-CD4) comprenant :
- une pluralité de couches métalliques comportant au moins une couche métallique supérieure (2 ; 32 ; 44 ; 62) et une couche métallique inférieure (4 ; 34 ; 40 ; 63) disposées en regard l'une de l'autre ;
- une cavité interne (5 ; 35 ; 45 ; 65) ménagée entre les couches métalliques supérieure et inférieure ; et
- une antenne RF (13), comprenant au moins une spire conductrice, disposée dans la cavité interne ;
dans laquelle les couches métalliques supérieure et inférieure comprennent chacune une zone d'évidemment partiel (Z1, Z2) en regard de ladite au moins une spire, chaque zone d'évidement partiel comportant au moins une ouverture (18) au travers de l'épaisseur de ladite couche métallique,
**caractérisé en ce que** chaque zone d'évidement partiel est partiellement recouverte par au moins une protrusion métallique (15) s'étendant depuis un bord (16) de la zone d'évidement partiel de sorte à définir le contour de ladite au moins une ouverture, et chaque protrusion métallique forme un doigt qui s'étend en regard d'une partie au moins de l'antenne RF.

2. Carte à puce selon la revendication 1, comprenant au moins une fente traversante (20, 22) s'étendant dans au moins une couche métallique depuis un bord d'une zone d'évidement partiel jusqu'à un bord périphérique de ladite couche métallique.

3. Carte à puce selon la revendication 1 ou 2, dans laquelle la cavité interne est formée par au moins un renfoncement (2a, 4a) dans l'une au moins parmi les couches métalliques supérieure et inférieure.

4. Carte à puce selon l'une quelconque des revendications 1 à 3, comprenant une couche métallique intermédiaire (30 ; 60) positionnée entre les couches métalliques supérieure et inférieure,
ladite cavité interne étant formée par une ouverture traversante (30a ; 60a) ménagée dans la couche métallique intermédiaire.

5. Carte à puce selon l'une quelconque des revendications 1 à 4, dans laquelle chaque zone d'évidement partiel (Z1, Z2) comprend une pluralité de dites protrusions métalliques (15) formant des doigts en regard d'au moins une partie de ladite au moins une spire.

6. Carte à puce selon l'une quelconque des revendications 1 à 5, dans laquelle chaque protrusion métallique (15) s'étend dans l'une des zones d'évidement partiel (Z1, Z2) de sorte que son extrémité distale soit libre, à distance non nulle du bord de ladite zone d'évidement.

7. Carte à puce selon l'une quelconque des revendications 1 à 6, dans laquelle chaque zone d'évidemment partiel (Z1, Z2) comprend une pluralité de dites protrusions métalliques (15) séparées les unes des autres par au moins une dite ouverture (18) de sorte à former collectivement un entrelacement métallique recouvrant partiellement la zone d'évidement partiel.

8. Carte à puce selon l'une la revendication 7, dans laquelle les protrusions métalliques (15) de chaque zone d'évidement partiel forment un entrelacement dont le motif satisfait la relation de Mushiake.

9. Carte à puce selon l'une quelconque des revendications 1 à 8, dans laquelle chaque zone d'évidement partiel comporte :
- une pluralité de protrusions métalliques (15) formant des arcs métalliques concentriques dans la zone d'évidement partiel (Z3 ; Z4) ; ou
- au moins une protrusion métallique (15) s'étendant en spirale depuis un bord de la zone d'évidement partiel (Z5).

10. Carte à puce selon l'une quelconque des revendications 1 à 9, dans laquelle les zones d'évidement partiel sont positionnées en regard l'une de l'autre.

11. Carte à puce selon l'une quelconque des revendications 1 à 10, dans laquelle les protrusions métalliques (15) occupent au plus 80% de la surface de chaque zone d'évidement partiel.

12. Carte à puce selon l'une quelconque des revendications 1 à 11, dans laquelle les fentes traversantes (20, 22) ne s'étendent pas en regard l'une de l'autre.

13. Carte à puce selon l'une quelconque des revendications 1 à 12, dans laquelle la carte à puce est dépourvue de matière plastique.

14. Carte à puce selon l'une quelconque des revendications 1 à 13, dans laquelle la couche métallique supérieure, la couche métallique inférieure et l'antenne RF sont isolées électriquement les unes des autres.

15. Carte à puce selon l'une quelconque des revendications 1 à 14, dans laquelle chaque zone d'évidement partiel est recouverte par une couche de protection électriquement isolante.

## Patentansprüche

1. Chipkarte (CD1-CD4), umfassend:
- eine Mehrzahl von metallischen Schichten, die mindestens eine obere metallische Schicht (2; 32; 44; 62) und eine untere metallische Schicht (4; 34; 40; 63) aufweisen, die einander gegenüber angeordnet sind;
- einen inneren Hohlraum (5; 35; 45; 65), der zwischen den oberen und unteren metallischen Schichten ausgebildet ist; und
- eine HF-Antenne (13), die mindestens eine leitende Windung umfasst und in dem inneren Hohlraum angeordnet ist;
wobei die oberen und unteren metallischen Schichten jeweils einen Teilausnehmungsbereich (Z1, Z2) gegenüber der mindestens einen Windung umfassen, wobei jeder Teilausnehmungsbereich mindestens eine Öffnung (18) durch die Dicke der metallischen Schicht hindurch aufweist,
**dadurch gekennzeichnet, dass** jeder Teilausnehmungsbereich durch mindestens einen metallischen Vorsprung (15) teilweise bedeckt wird, der sich von einem Rand (16) des Teilausnehmungsbereichs aus erstreckt, so dass die Kontur der mindestens einen Öffnung definiert wird, und jeder metallische Vorsprung einen Finger bildet, der sich gegenüber mindestens einem Teil der HF-Antenne erstreckt.

2. Chipkarte nach Anspruch 1, umfassend mindestens einen durchgehenden Schlitz (20, 22), der sich in mindestens einer metallischen Schicht von einem Rand eines Teilausnehmungsbereichs aus bis zu einem Umfangsrand der metallischen Schicht erstreckt.

3. Chipkarte nach Anspruch 1 oder 2, bei welcher der innere Hohlraum durch mindestens eine Vertiefung (2a, 4a) in mindestens einer unter den oberen und unteren metallischen Schichten gebildet wird.

4. Chipkarte nach einem der Ansprüche 1 bis 3, umfassend eine metallische Zwischenschicht (30; 60), die zwischen den oberen und unteren metallischen Schichten positioniert ist, wobei der innere Hohlraum durch eine durchgehende Öffnung (30a; 60a) gebildet wird, die in der metallischen Zwischenschicht ausgebildet ist.

5. Chipkarte nach einem der Ansprüche 1 bis 4, bei der jeder Teilausnehmungsbereich (Z1, Z2) eine Mehrzahl von metallischen Vorsprüngen (15) umfasst, die Finger gegenüber mindestens einem Teil der mindestens einen Windung bilden.

6. Chipkarte nach einem der Ansprüche 1 bis 5, bei der sich jeder metallische Vorsprung (15) in einem der Teilausnehmungsbereiche (Z1, Z2) so erstreckt, dass sein distales Ende frei ist, in einem Abstand ungleich null vom Rand des Ausnehmungsbereichs.

7. Chipkarte nach einem der Ansprüche 1 bis 6, bei der jeder Teilausnehmungsbereich (Z1, Z2) eine Mehrzahl von metallischen Vorsprüngen (15) umfasst, die voneinander durch mindestens eine Öffnung (18) getrennt sind, so dass sie gemeinsam ein metallisches Geflecht bilden, das den Teilausnehmungsbereich teilweise bedeckt.

8. Chipkarte nach einem Anspruch 7, bei der die metallischen Vorsprünge (15) jedes Teilausnehmungsbereichs ein Geflecht bilden, dessen Muster die Mushiake-Beziehung erfüllt.

9. Chipkarte nach einem der Ansprüche 1 bis 8, bei der jeder Teilausnehmungsbereich aufweist:
- eine Mehrzahl metallischer Vorsprünge (15), die konzentrische metallische Bögen in dem Teilausnehmungsbereich (Z3; Z4) bilden; oder
- mindestens einen metallischen Vorsprung (15), der sich spiralförmig von einem Rand des Teilausnehmungsbereichs (Z5) aus erstreckt.

10. Chipkarte nach einem der Ansprüche 1 bis 9, bei der die Teilausnehmungsbereiche einander gegenüber positioniert sind.

11. Chipkarte nach einem der Ansprüche 1 bis 10, bei der die metallischen Vorsprünge (15) höchstens 80 % der Fläche jedes Teilausnehmungsbereichs einnehmen.

12. Chipkarte nach einem der Ansprüche 1 bis 11, bei der sich die durchgehenden Schlitze (20, 22) nicht einander gegenüber erstrecken.

13. Chipkarte nach einem der Ansprüche 1 bis 12, wobei die Chipkarte frei von Kunststoff ist.

14. Chipkarte nach einem der Ansprüche 1 bis 13, bei der die obere metallische Schicht, die untere metallische Schicht und die HF-Antenne elektrisch voneinander isoliert sind.

15. Chipkarte nach einem der Ansprüche 1 bis 14, bei der jeder Teilausnehmungsbereich mit einer elektrisch isolierenden Schutzschicht bedeckt ist.

## Claims

1. Chip card (CD1-CD4) comprising:
- a plurality of metal layers comprising at least an upper metal layer (2; 32; 44; 62) and a lower metal layer (4; 34; 40; 63) placed facing each other;
- an internal cavity (5; 35; 45; 65) placed between the upper and lower metal layers; and
- an RF antenna (13), comprising at least one conductive turn, placed in the internal cavity;
in which the upper and lower metal layers each comprise a partially empty region (Z1, Z2) facing said at least one turn, each partially empty region comprising at least one aperture (18) through the thickness of said metal layer,
**characterized in that** each partially empty region is partially covered by at least one metal protrusion (15) extending from an edge (16) of the partially empty region so as to define the outline of said at least one aperture, and each metal protrusion forms a finger than lies facing one portion at least of the RF antenna.

2. Chip card according to Claim 1, comprising at least one through-slit (20, 22) extending, in at least one metal layer, from an edge of a partially empty region to a peripheral edge of said metal layer.

3. Chip card according to Claim 1 or 2, wherein the internal cavity is formed by at least one recess (2a, 4a) in at least one among the upper and lower metal layers.

4. Chip card according to any one of Claims 1 to 3, comprising an intermediate metal layer (30; 60) positioned between the upper and lower metal layers,
said internal cavity being formed by a through-aperture (30a; 60a) formed in the intermediate metal layer.

5. Chip card according to any one of Claims 1 to 4, wherein each partially empty region (Z1, Z2) comprises a plurality of said metal protrusions (15) forming fingers facing at least one portion of said at least one turn.

6. Chip card according to any one of Claims 1 to 5, wherein each metal protrusion (15) extends through one of the partially empty regions (Z1, Z2) so that its far end is free, at non-zero distance from the edge of said empty region.

7. Chip card according to any one of Claims 1 to 6, wherein each partially empty region (Z1, Z2) comprises a plurality of said metal protrusions (15) separated from one another by at least one said aperture (18) so as to collectively form a metal interdigitation partially covering the partially empty region.

8. Chip card according to Claim 7, wherein the metal protrusions (15) of each partially empty region form an interdigitation, the pattern of which satisfies the Mushiake relationship.

9. Chip card according to any one of Claims 1 to 8, wherein each partially empty region comprises:
- a plurality of metal protrusions (15) forming concentric metal arcs in the partially empty region (Z3; Z4); or
- at least one metal protrusion (15) that spirals in from an edge of the partially empty region (Z5).

10. Chip card according to any one of Claims 1 to 9, wherein the partially empty regions are positioned facing each other.

11. Chip card according to any one of Claims 1 to 10, wherein the metal protrusions (15) occupy at most 80% of the area of each partially empty region.

12. Chip card according to any one of Claims 1 to 11, wherein the through-slits (20, 22) do not lie facing one another.

13. Chip card according to any one of Claims 1 to 12, wherein the chip card is devoid of plastic.

14. Chip card according to any one of Claims 1 to 13, wherein the upper metal layer, the lower metal layer and the RF antenna are electrically insulated from one another.

15. Chip card according to any one of Claims 1 to 14, wherein each partially empty region is covered by a protective electrically insulating layer.
